(19) Europäisches Patentamt / European Patent Office / Office européen des brevets

(11) **EP 3 547 011 A1**

(12) **EUROPEAN PATENT APPLICATION**

(43) Date of publication:
02.10.2019 Bulletin 2019/40

(51) Int Cl.:
*G02B 27/64* (2006.01)  *G02B 7/182* (2006.01)
*G01S 3/786* (2006.01)  *G02B 26/10* (2006.01)
*H04N 5/225* (2006.01)

(21) Application number: 18195223.5

(22) Date of filing: 18.09.2018

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: 29.03.2018 JP 2018063549

(71) Applicant: **Hitachi, Ltd.**
**Tokyo 100-8280 (JP)**

(72) Inventors:
• **MATSUKA, Daisuke**
**Chiyoda-ku, Tokyo 100-8280 (JP)**
• **MIMURA, Masahiro**
**Chiyoda-ku, Tokyo 100-8280 (JP)**
• **HINO, Kazuhiko**
**Chiyoda-ku, Tokyo 100-8280 (JP)**
• **FUJIMURA, Takayuki**
**Chiyoda-ku, Tokyo 100-8280 (JP)**

(74) Representative: **Mewburn Ellis LLP**
**City Tower**
**40 Basinghall Street**
**London EC2V 5DE (GB)**

(54) **MOVING OBJECT IMAGING SYSTEM AND MOVING OBJECT IMAGING METHOD**

(57) Provided is a moving object imaging system including: an imager that captures an image of a moving object and outputs captured image data; a deflector that changes a deflection angle of an optical axis of the imager by rotating a reflecting mirror; a housing that supports the deflector; a posture change detector that detects change in posture of the housing; and a control unit that controls a deflection angle of the deflector in accordance with a detection result of the posture change detector.

FIG. 1

**Description**

BACKGROUND OF THE INVENTION

FIELD OF THE INVENTION

The present invention relates to a moving object imaging system and a moving object imaging method suitable for tracking and imaging of a flying object freely moving in space.

BACKGROUND ART

In the related art, there are known apparatuses that capture images of moving objects such flying objects moving in a target region. In order to track a moving object in motion and capture an image thereof, it is necessary to control the optical axis of the camera so as to capture the moving object in the imaging range of the camera. As a control method for directing the optical axis of the camera to the moving object, there is a known method capable of directing the optical axis of the camera to the moving object by driving a plurality of rotatable movable mirrors with motors having different rotation axes.

This technique is disclosed in, for example, JP-A-H10-136234. In the abstract of the document, the following description is given. "A light transmissive window W1 is provided in a non-light-transmissive housing B1. In addition, in the non-light-transmissive housing B1, an imaging apparatus C1, an azimuth angle rotatable reflecting mirror M1, a tilt angle rotatable reflecting mirror M2, and motors m1 and m2 rotating the mirrors M1 and M2 are disposed. The rays I from the field of view of a subject pass through the window W1, and are then regularly reflected by the mirror M1, and reflected again by the mirror M2. Thereby, an image of the subject returns to an erect image, and the erect image of the subject is incident into the imaging apparatus C1."

There is also known a technique of detecting change in posture of a camera due to disturbance or the like with an acceleration sensor and correcting the inclination of the captured image. For example, in the abstract of JP-A-2017-225039, the following description is given. "An imaging apparatus includes: an optical system; an element that outputs an image, which is incident through the optical system, as image data; an acceleration sensor that outputs a signal representing acceleration in three axial directions; an angular velocity sensor that outputs a signal representing an angular velocity around the three axes; and a circuit that processes the image data. The circuit corrects a low frequency component of the inclination of the image on the basis of the acceleration, and performs correction processing of correcting a high frequency component of the inclination of the image on the basis of the angular velocity."

SUMMARY OF THE INVENTION

The method of installing the surveillance camera is not explicitly described in JP-A-H10-136234, in order to install the camera at a desired place. However, considering the ease of installation and movement and the degree of freedom, the camera is not strongly fixed to the ground or a structural member, but mostly fixed by using a simple supporting apparatus such as a tripod. In a case of adopting such a simple installation mode, there is a possibility that the posture of the surveillance camera changes due to disturbance such as wind or vehicle vibration in the outdoors. In addition, even in the indoor, the posture of the surveillance camera may change due to disturbance such as floor vibration caused by walking of a person. Then, especially when high-ratio zoom imaging is performed, blurring synchronized with disturbance may be mixed in the captured image data.

In JP-A-2017-225039, in a case where the posture of the camera changes due to disturbance, the inclination of the image data is corrected through image processing on the basis of acceleration, such that blurring is suppressed. However, since the inclination is corrected through image processing, it is difficult to cope with the change in posture of the movable mirror due to the influence of the disturbance which occurs in the camera having the movable mirror as in JP-A-H10-136234.

The present invention has been made in consideration of the above, and it is an object of the present invention to provide a moving object imaging system and a moving object imaging method capable of preventing blurring from being mixed in captured image data by controlling the posture of the movable mirror in accordance with disturbance even in a case where a camera using a movable mirror (reflecting mirror) is not fixed to the ground or a structural member and is installed on a simple supporting apparatus such as a tripod without a vibration damping apparatus.

In order to achieve the above-mentioned object, in the present invention, a moving object imaging system of the present invention includes : an imager that captures an image of a moving object and outputs captured image data; a deflector that changes a deflection angle of an optical axis of the imager by rotating a reflecting mirror; a housing that supports the deflector; a posture change detector that detects change in posture of the housing; and a control unit that controls a deflection angle of the deflector in accordance with a detection result of the posture change detector.

According to the present invention, even in the case where the camera using the movable mirror (reflecting mirror) is not fixed to the ground surface or the structural member and the camera is installed on a simple supporting apparatus such as a tripod without the vibration damping apparatus, it is possible to prevent the blurring from being mixed in the captured image data by controlling the posture of the movable mirror in accordance with disturbance.

BRIEF DESCRIPTION OF THE DRAWINGS

Fig. 1 is a schematic diagram of a moving object imaging system according to Example 1.
Fig. 2 is a functional block diagram of an imaging apparatus control unit, a deflector, and the like according to Example 1.
Fig. 3 is a schematic diagram illustrating a control method of the deflector of Example 1.
Fig. 4 is a schematic diagram of a moving object imaging system according to Example 2.
Fig. 5 is a functional block diagram of an imaging apparatus control unit, a deflector, and the like according to Example 2.
Fig. 6 is a schematic diagram illustrating image processing in the image processing device according to Example 2.
Fig. 7 is a schematic diagram of a moving object imaging system according to Example 3.
Fig. 8 is a functional block diagram of an imaging apparatus control unit, a deflector, and the like according to Example 3.
Figs. 9A to 9C are schematic diagrams for explaining calculation in the correction amount calculation unit of Example 3.

Fig. 10 is a schematic diagram for explaining image processing in the image processing device according to Example 3.

DETAILED DESCRIPTION OF THE INVENTION

Hereinafter, examples of the present invention will be described. In the following examples, for the sake of convenience, description will be given with reference to a plurality of examples. Unless otherwise stated, the examples do not unrelate to one another such that one example is a part of another example, or a modification example, details, supplementary explanation, or the like of all examples.

Example 1

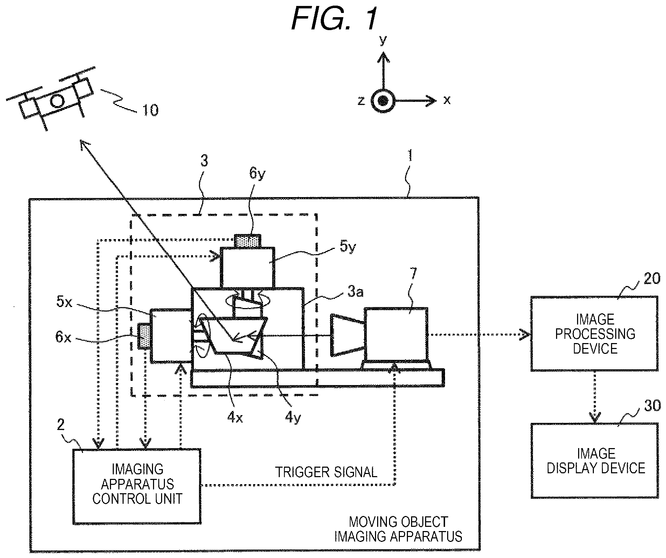

A moving object imaging system according to Example 1 of the present invention will be described with reference to Figs. 1 to 3. In the following description, an example will be described in which the moving object as the tracking imaging target is the flying object 10 such as a drone that freely fly in the three-dimensional space. However, a vehicle, a person, a ship, and the like moving on the plane may be a tracking imaging target.

Fig. 1 is a schematic diagram illustrating constituent elements of the moving object imaging system of the present example together with the flying object 10 which is a tracking imaging target. The constituent elements include a moving object imaging apparatus 1, an image processing device 20 such as a personal computer that processes the received captured image data 8, and an image display device 30 such as a liquid crystal display that displays display data 8a after image processing. The moving object imaging apparatus 1 is installed in a simple supporting apparatus such as a tripod which is not shown. In Fig. 1, the right direction is the positive direction of the x axis, the up direction is the positive direction of the y axis, the front direction is the positive direction of the z axis, and the dotted lines connecting the respective elements indicate the signal lines.

In the moving object imaging apparatus 1 shown here, the imager 7 and the deflection unit 3 are provided on the base of a rigid body such that the optical axis of the imager 7 is parallel to the x axis and the optical axis of the imager 7 can be deflected in the vertical direction or the lateral direction by the deflection unit 3. The moving object imaging apparatus 1 also includes an imaging apparatus control unit 2 that controls the imaging timing and the imaging magnification of the imager 7, the deflection angle in the deflection unit 3, and the like. Thus, the captured image data 8, which is obtained by tracking the flying object 10 through the control, is output from the imager 7.

In order to track the optical axis of the imager 7 on the flying object 10, the deflection unit 3 includes a reflecting mirror 4x that deflects the optical axis in the vertical direction, and a reflecting mirror 4y that deflects the optical axis in the lateral direction, in a housing 3a made of a rigid body such as a steel plate. In addition, the deflection unit 3 includes a deflector 5x that rotates the reflecting mirror 4x around the x axis, on the side surface of the housing 3a, and a deflector 5y that rotates the reflecting mirror 4y around the y axis, on the upper surface of the housing 3a. It should be noted that the reflecting mirrors 4x and 4y and the deflectors 5x and 5y may be collectively referred to as a deflection unit. Further, an angular velocity sensor 6x is disposed on the rotation axis of the deflector 5x, and an angular velocity sensor 6y is disposed on the rotation axis of the deflector 5y. By using the angular velocity sensors 6x and 6y, in a case where the posture of the deflection unit 3 changes due to the influence of disturbance such as vibration or wind, the amount of rotation $\Delta\theta_x$ around the x axis can be detected on the basis of the angular velocity $\omega_x$ which is output from the angular velocity sensor 6x, and the amount of rotation $\Delta\theta_y$ around the y axis can be detected on the basis of the angular velocity $\omega_y$ which is output from the angular velocity sensor 6y. In the following description, the two reflecting mirrors may be collectively referred to as the reflecting mirror 4, the two deflectors may be collectively referred to as a deflector 5, and the two angular velocity sensors may be collectively referred to as an angular velocity sensor 6.

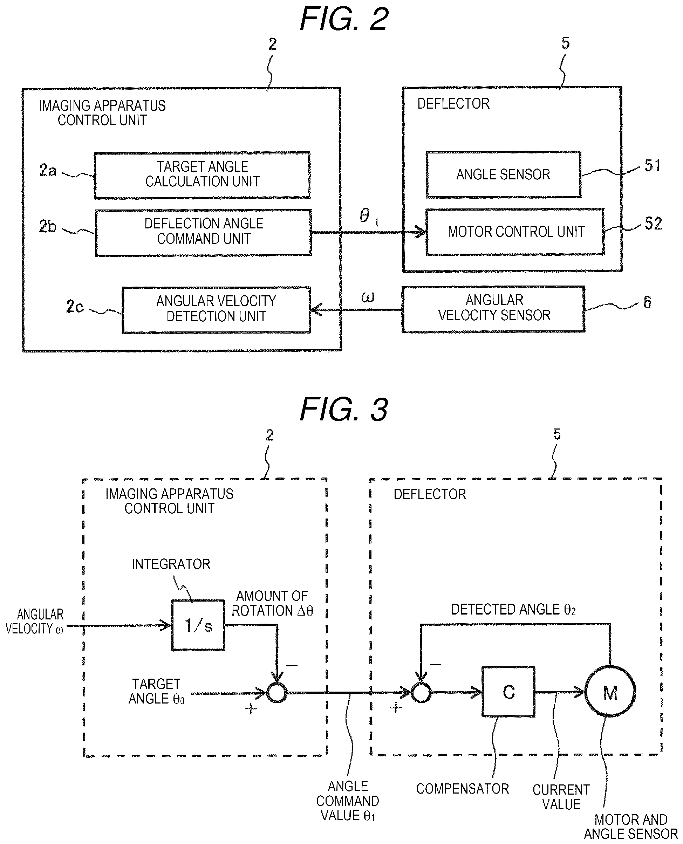

Fig. 2 is a schematic diagram illustrating details of the imaging apparatus control unit 2, the deflector 5, and the angular velocity sensor 6 of the present example. Since the deflection unit 3 of the present example is provided with two reflecting mirrors 4x and 4y, the configuration of Fig. 2 is necessary for each reflecting mirror. However, since the contents of the deflection angle control of both reflecting mirrors are the same, in the following description, the configuration of Fig. 2 which is representative of both will be described as an example.

In addition to a motor (not shown) such as a galvano motor capable of angle control, the deflector 5 includes an angle sensor 51 such as an encoder that detects the deflection angle of the motor shown in Fig. 2, and a motor control unit 52 that supplies the motor with drive power.

The imaging apparatus control unit 2 further includes a target angle calculation unit 2a that calculates a target deflection angle $\theta_0$ of the reflecting mirror 4 necessary for tracking the flying object 10 and capturing an image of the flying object 10 at the center of the captured image data 8, a deflection angle command unit 2b that outputs a deflection angle command value $\theta_1$ based on a target deflection angle $\theta_0$ to the motor control unit 52 of the deflector 5, an angular velocity detection unit 2c that detects the angular velocity $\omega$ from the output of the angular velocity sensor 6, and an imager control unit (not shown) that controls the imaging timing of the imager 7. The functions of the respective units in the imaging apparatus control unit 2 are realized by loading a program stored in an auxiliary storage device such as a hard disk or the like of the imaging apparatus control unit 2 on a main storage device such as a semiconductor memory and the like and causing a computing device such as a CPU to execute the program. However, in the following description, such well-known operations will be appropriately omitted, and description thereof will be given.

Fig. 3 is a diagram for explaining processing, which is mainly executed by the deflection angle command unit 2b, in the imaging apparatus control unit 2, and processing, which is mainly executed by the motor control unit 52, in the deflector 5. In a case where the angular velocity $\omega$ which is the output of the angular velocity sensor 6 is input to the angular velocity detection unit 2c, as shown in Fig. 3, the integration processing is performed on the angular velocity $\omega$, and the amount of rotation $\Delta\theta$ around the axis due to the influence of disturbance such as wind is calculated. Thereafter, the deflection angle command unit 2b subtracts the amount of rotation $\Delta\theta$ corresponding to the influence of the disturbance from the target deflection angle $\theta_0$ calculated by the target angle calculation unit 2a, and outputs this amount as the deflection angle command value $\theta_1$ to the deflector 5.

In the deflector 5, a value obtained by subtracting a motor rotation angle $\theta_2$ detected by the angle sensor 51 from the received deflection angle command value $\theta_1$ is input to a compensator C. Then, a current value corresponding to the difference between the deflection angle command value $\theta_1$ and the motor rotation angle $\theta_2$ is output from the compensator C, and the motor rotates in accordance with the current value. As a result, the reflecting mirror 4 is set at a predetermined angle designated by the imaging apparatus control unit 2.

As described above, in the present example, the deflector 5 is controlled by using the deflection angle command value $\theta_1$ that cancels the amount of rotation $\Delta\theta$ due to disturbance such as wind. With such a configuration, even in a case where the posture of the deflection unit 3 changes due to the influence of disturbance, the deflection angle of the reflecting mirror 4 is sequentially corrected in a direction to cancel out the influence of the disturbance. As a result, the influence of disturbance can be suppressed in the captured image data 8 of the imager 7, and the captured image data 8 can be made free from blurring.

As described above, according to the present example, even in a case where the moving object imaging apparatus using the deflection unit is installed on the simple supporting apparatus such as a tripod, it is possible to prevent blurring from being mixed in the captured image data by controlling the posture of the reflecting mirror in the deflection unit in accordance with disturbance such as wind.

Example 2

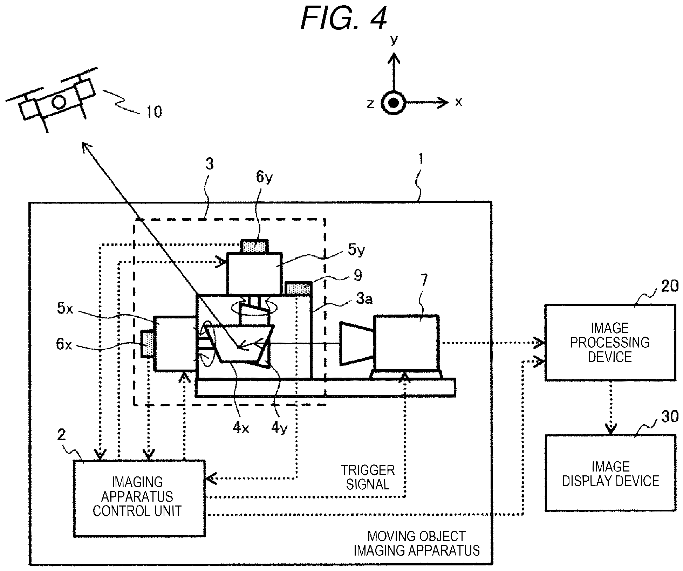

Next, a moving object imaging system according to Example 2 of the present invention will be described with reference to Figs. 4 to 6. It should be noted that redundant description of commonalities with Example 1 will be omitted.

In the moving object imaging system of Example 1, change in posture around the rotation axis of the reflecting mirror 4 is detected as the amount of rotation $\Delta\theta$ by using the angular velocity sensor 6. However, in the configuration of the moving object imaging system of the present example, by using an acceleration sensor 9 to be described later, the change in posture due to the movement of the housing 3a of the deflection unit 3 is detected as an amount of shift $\Delta$, and display data 8a to be displayed on the image display device 30 is extracted on the basis of the amount of shift $\Delta$.

Fig. 4 is a schematic diagram of the moving object imaging apparatus 1, the image processing device 20, and the image display device 30 constituting the moving object imaging system of the present example. As shown here, a configuration of the moving object imaging system of the present example is different from the configuration of Example 1 shown in Fig. 1 in the following point. The acceleration sensor 9, which is provided on the housing 3a of the deflection unit 3, and a signal line are added. The signal line connects the imaging apparatus control unit 2 and the image processing device 20.

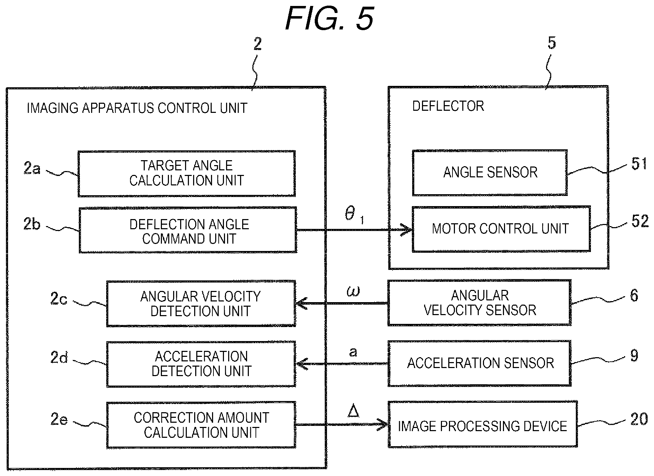

Fig. 5 is a schematic diagram illustrating details of the imaging apparatus control unit 2, the deflector 5, the angular velocity sensor 6, the acceleration sensor 9, and the image processing device 20 according to the present example. As shown here, a configuration of the imaging apparatus control unit 2 of the present example is different from the configuration of Example 1 shown in Fig. 2 in the following point. The acceleration detection unit 2d, which detects an acceleration a from the output of the acceleration sensor 9, and a correction amount calculation unit 2e, which outputs the amount of shift $\Delta$ necessary for correcting the captured image data 8, are added to the image processing device 20.

The acceleration sensor 9 of the present example is capable of individually detecting accelerations a ($a_x$, $a_y$, $a_z$) in three directions applied in a case where the deflection unit 3 moves due to disturbance such as wind. Then, the correction amount calculation unit 2e of the imaging apparatus control unit 2 performs the integration processing twice on the acceleration a in each direction, thereby calculating the amount of movement of the deflection unit 3 due to disturbance (amount of shift $\Delta$ ($\Delta_x$, $\Delta_y$, $\Delta_z$)).

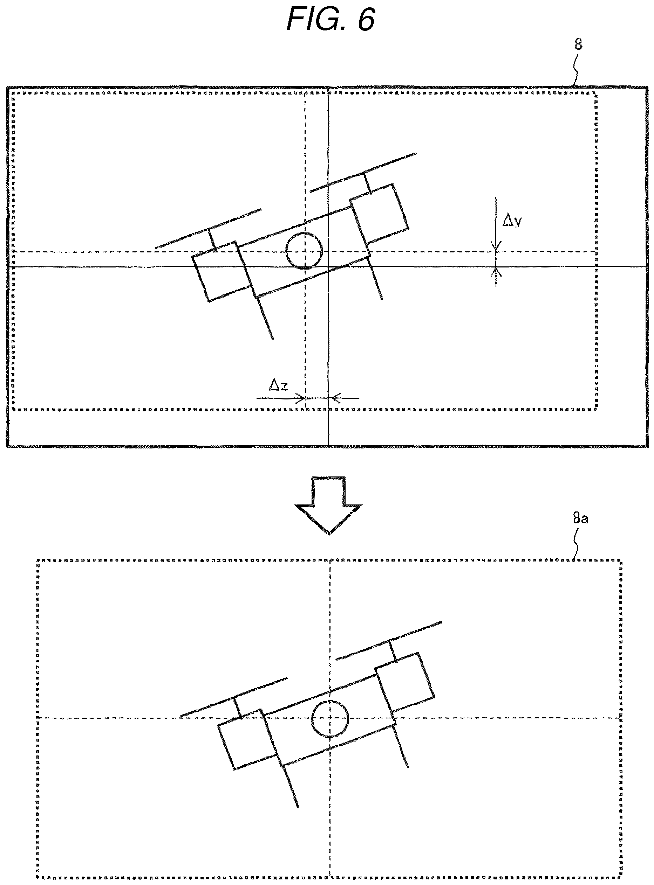

Next, a processing method of the captured image data 8 using the amount of shift $\Delta$ will be described with reference to Fig. 6. In Fig. 6, the upper side shows an example of the captured image data 8 when the imager 7 captures a zoomed image of the flying object 10, and the lower side shows an example of the display data 8a displayed on the image display device 30 on the basis of the captured image data 8. As clearly seen from a comparison between both sides of the figure, the captured image data 8 is larger than the display data 8a (for example, the former is 1350$\times$900 pixels and the latter is 1280$\times$720 pixels) . Therefore, a partial region of the captured image data 8 can be cut out to be the display data 8a.

As described above, the amount of shift $\Delta$, which is output by the correction amount calculation unit 2e, corresponds to the amount of movement of the deflection unit 3 due to disturbance . Thus, in a case where the amount of shift $\Delta$ is output, it can be presumed that the flying object 10 on the captured image data 8 is at a position which is shifted by the amount of shift $\Delta$ from a position predetermined by the imaging apparatus control unit 2.

In order to correct this shift, the image processing device 20 of the present example extracts a region with a predetermined size shifted by an amount of shift, which is input from the correction amount calculation unit 2e, $\Delta$ from the center of the captured image data 8 on the basis of the amount of shift $\Delta$, and transmits the region as display data 8a to the image display device 30. Through this processing, the display data 8a corrected for the influence of the amount of shift $\Delta$ due to the disturbance can be displayed on the image display device 30. Thus, even in a case where the display data 8a is a moving image, the influence of blurring due to disturbance can be reduced.

According to the moving object imaging apparatus of the present example described above, it is possible to suppress the disturbance influence through the control shown in Fig. 3 performed by the deflection angle command unit 2b or the like as in Example 1. In addition, it is possible to suppress the influence of disturbance even in the combination of the correction amount calculation unit 2e and the image processing device 20. Therefore, the quality of the display data 8a displayed on the image display device 30 can be improved as compared with Example 1.

Example 3

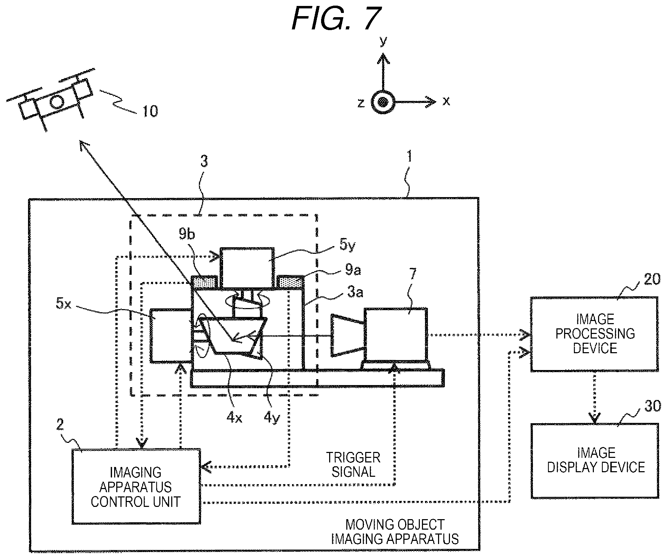

Next, a moving object imaging system according to Example 3 of the present invention will be described with reference to Figs. 7 to 9. It should be noted that redundant description of commonalities with Example 1 is omitted.

In Examples 1 and 2, the deflection angle of the reflecting mirror 4 is corrected on the basis of the amount of rotation $\Delta\theta$ around the axis of the deflection unit 3 detected by the angular velocity sensor 6, and in Example 2, the deflection detected by the acceleration sensor 9 On the basis of the amount of shift $\Delta$ of the deflection unit 3, the display data 8a was extracted from the captured image data 8.

On the other hand, in the moving object imaging system of the present example, two acceleration sensors 9 are provided on the surface of the housing 3a of the deflection unit 3. On the basis of these outputs, the amount of rotation $\Delta\theta$ around the axis of the deflection unit 3 and the amount of shift $\Delta$ are calculated. Thereby, even in a configuration in which the angular velocity sensor 6 is omitted, control for coping with disturbance according to Examples 1 and 2 can be executed.

Fig. 7 is a schematic diagram of the moving object imaging apparatus 1, the flying object 10, the image processing device 20, and the image display device 30 according to the present example. As shown here, in the present example, instead of the angular velocity sensors 6x and 6y and the acceleration sensor 9 of Example 2 shown in Fig. 4, the two acceleration sensors 9a and 9b are provided. It should be noted that the two acceleration sensors 9a and 9b can be provided at an optional position on the surface of the housing 3a, and in the example of Fig. 7, both acceleration sensors are arranged in the x axis direction. Hereinafter, both acceleration sensors are disposed with a distance L therebetween in the z axis direction (the front-to-back direction of the drawing).

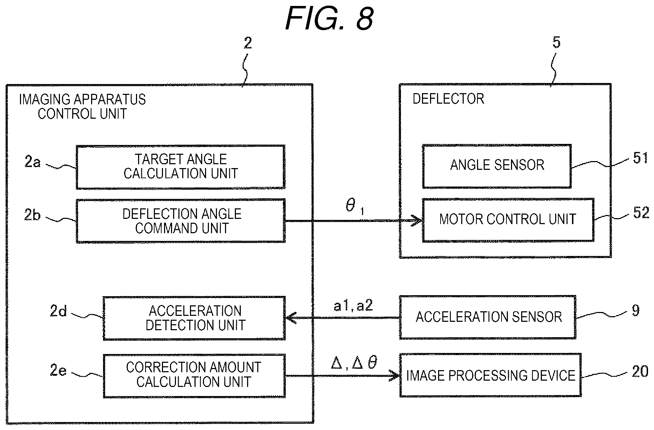

Fig. 8 is a schematic diagram illustrating details of the imaging apparatus control unit 2, the deflector 5, the acceleration sensor 9, and the image processing device 20 according to the present example. As shown here, in the imaging apparatus control unit 2 of the present example, the angular velocity sensor 6 and the angular velocity detection unit 2c are removed from the configuration of Example 2 shown in Fig. 5. Since the two acceleration sensors 9a and 9b are provided, two accelerations a1 and a2 are input to the imaging apparatus control unit 2, and the amount of shift $\Delta$ and the amount of rotation $\Delta$ are output to the image processing device 20 from the correction amount calculation unit 2e.

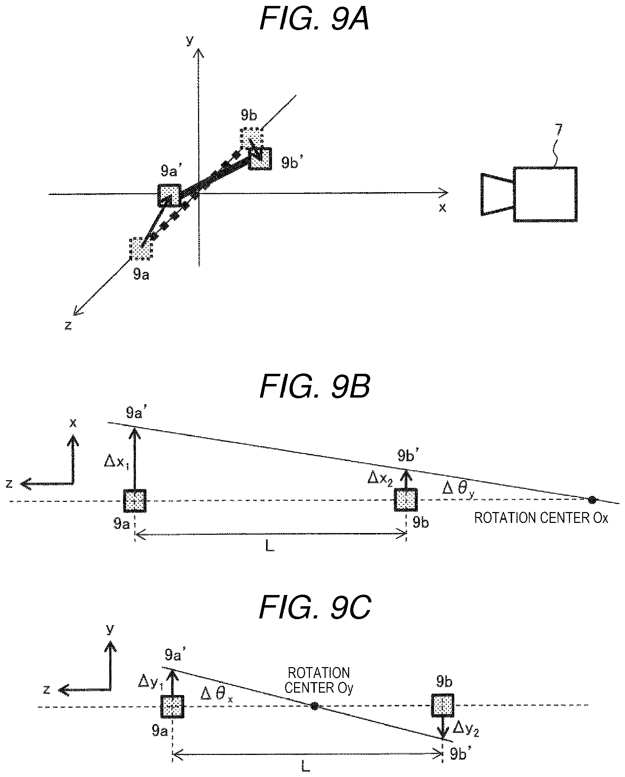

Next, a method of calculating the amount of shift $\Delta$ and the amount of rotation $\Delta\theta$ of the deflection unit 3 through the correction amount calculation unit of the imaging apparatus control unit 2 will be described with reference to Fig. 9 and the like. As shown in Fig. 9A, it is assumed that the posture of the deflection unit 3 changes due to disturbance, such that the acceleration sensor 9a on the housing 3a moves to a position 9a', and the acceleration sensor 9b moves to a position 9b'. In this case, in a case where the accelerations a1 and a2 which are the outputs of the respective acceleration sensors are input to the acceleration detection unit 2d, the integration processing is applied twice to each of the accelerations a1 and a2. Thereby, it is possible to calculate the amount of movement in each direction of x, y, and z at the installation point of each acceleration sensor. Hereinafter, it is assumed that the amount of movement of the acceleration sensor 9a is $\Delta_1$ ($\Delta x_1$, $\Delta y_1$, $\Delta z_1$) and the amount of movement of the acceleration sensor 9b is $\Delta_2$ ($\Delta x_2$, $\Delta y_2$, $\Delta z_2$).

Fig. 9B is an explanatory diagram for explaining a method of calculating the amount of rotation $\Delta\theta_y$ of the straight line connecting the acceleration sensors 9a and 9b projected on the xz plane. Fig. 9C is an explanatory diagram for explaining a method of calculating the amount of rotation $\Delta\theta_x$ of the straight line connecting the acceleration sensors 9a and 9b projected on the yz plane . As clearly seen from these drawings, the amount of rotations $\Delta\theta_x$ and $\Delta\theta_y$ can be obtained by the following (Expression 1).

Expression 1

$$\begin{pmatrix} \Delta\theta_x \\ \Delta\theta_y \end{pmatrix} = \begin{pmatrix} \tan^{-1}\left(\dfrac{\Delta y_1 - \Delta y_2}{L}\right) \\ \tan^{-1}\left(\dfrac{\Delta x_1 - \Delta x_2}{L}\right) \end{pmatrix} \quad \dots \text{(Expression 1)}$$

The amount of rotation $\Delta\theta$ obtained by the correction amount calculation unit 2e on the basis of Equation 1 is equivalent to the amount of rotation $\Delta\theta$ of the deflection unit 3 in Fig.

3 of Example 1. Thus, according to the configuration of the present example, even in a case where the angular velocity sensor 6 of Example 1 is omitted, it is possible to realize the same control of the deflection angle of the reflecting mirror 4 as in Example 1.

In addition to the image processing in consideration of the amount of shift $\Delta$ as in Example 2, the present example also executes image processing in which the amount of rotation $\Delta\theta$ of the deflection unit 3 is considered. As shown in Fig. 9A, in the case of the present example in which the optical axis of the imager 7 and the x axis are parallel to each other, the captured image data 8 of the imager 7 is affected by the amount of rotation $\Delta\theta_x$ around the x axis of the deflection unit 3. Therefore, in the image processing device 20, the influence of the inclination of the deflection unit 3 due to disturbance can be removed by applying the correction processing to the captured image data 8 on the basis of the amount of rotation $\Delta\theta_x$ which is input from the correction amount calculation unit 2e.

In the image processing device 20 of the present example, in a manner similar to that of Example 2, the image processing in which the amount of shift $\Delta$ is considered is performed, and then the display data 8a is determined. In the present example, unlike Example 2, since the outputs of the two acceleration sensors 9 are obtained, the correction amount calculation unit 2e calculates the amount of shift $\Delta$ used for the image correction processing on the basis of the following (Expression 2).

Expression 2

$$\begin{pmatrix} \Delta y \\ \Delta z \end{pmatrix} = \begin{pmatrix} \dfrac{\Delta y_1 + \Delta y_2}{2} \\ \dfrac{\Delta z_1 + \Delta z_2}{2} \end{pmatrix} \qquad \dots \text{(Expression 2)}$$

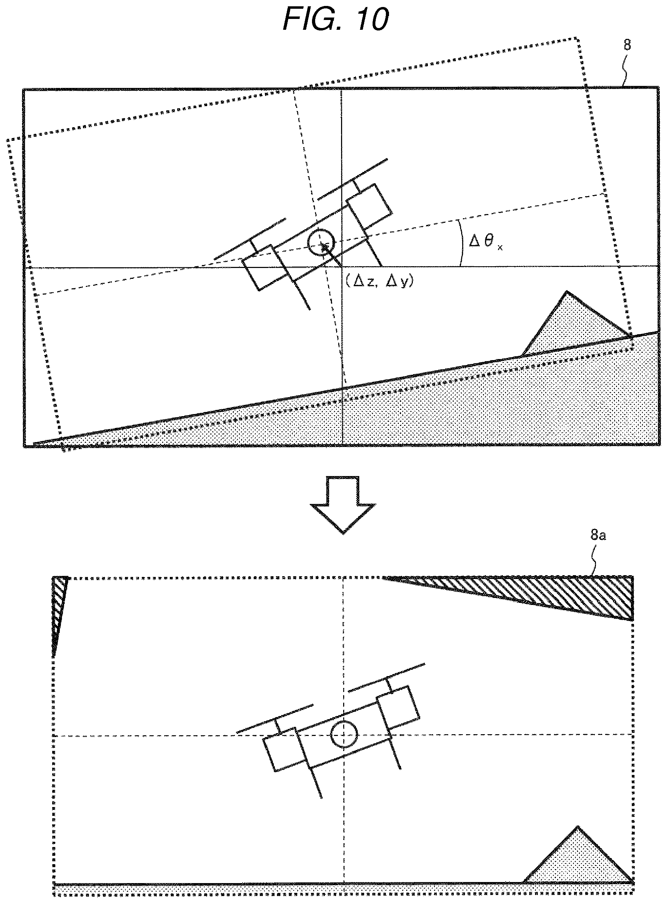

Fig. 10 shows an example of a process from when the image processing is performed on the captured image data 8 to when the display data 8a is obtained on the basis of the amount of rotation $\Delta\theta_x$, the amount of shift $\Delta y$, and the amount of shift $\Delta z$ calculated by the correction amount calculation unit 2e. First, as shown in the upper side of Fig. 10, a position shifted by ($\Delta z$, $\Delta y$) from the center position of the captured image data 8 is specified, and an area tilted by an amount corresponding to the amount of rotation $\Delta\theta_x$ around the specified position is extracted. Next, by applying correction processing to make this region horizontal, it is possible to display, on the image display device 30, the display data 8a from which the influence of disturbance has been removed, as shown in the lower side of Fig. 10.

According to the moving object imaging apparatus 1 of the present example described above, in addition to the effects obtained in Examples 1 and 2, the influence of the inclination of the deflection unit 3 due to disturbance can be removed from the display data 8a displayed on the image display device 30. Therefore, the display data 8a with higher quality can be displayed.

It should be noted that the present invention is not limited to the above-mentioned examples, but includes various modification examples. For example, the above-mentioned examples have been described in detail in order to explain the present invention in an easy-to-understand manner, and are not necessarily limited to those having all the configurations described. Further, a part of the configuration of one example may be replaced by the configuration of another example, and the configuration of one example may be added to the configuration of another example. Further, in the configuration of each example, addition of another configuration, deletion, and replacement may be possible.

**Claims**

1.   A moving object imaging system comprising:

> an imager that captures an image of a moving object and outputs captured image data;
> a deflector that changes a deflection angle of an optical axis of the imager by rotating a reflecting mirror;
> a housing that supports the deflector;
> a posture change detector that detects change in posture of the housing; and
> a control unit that controls a deflection angle of the deflector in accordance with a detection result of the posture change detector.

2.   The moving object imaging system according to claim 1,
   wherein the posture change detector is an angular velocity sensor that detects change in angular velocity.

3.   The moving object imaging system according to claim 2,
   wherein the angular velocity sensor is disposed on a rotation axis of the deflector, and detects an angular velocity around the rotation axis.

4.   The moving object imaging system according to claim 1,
   wherein the posture change detector is an acceleration sensor that detects change in acceleration.

5.   The moving object imaging system according to claim 4, further comprising:

> an image processing device that generates display data on the basis of the captured image data; and
> an image display device that displays the display data,
> wherein the image processing device cuts out a partial region of the captured image data as the display data on the basis of an amount of shift of the housing which is calculated on the basis of the acceleration detected by the acceleration sensor.

6.   The moving object imaging system according to claim 1,
   wherein the posture change detector is two acceleration sensors that detect change in acceleration.

7. The moving object imaging system according to claim 6, further comprising:

an image processing device that generates display data on the basis of the captured image data; and
an image display device that displays the display data,
wherein the image processing device generates the display data by performing rotation processing on the captured image data on the basis of an amount of rotation of the housing which is calculated on the basis of two accelerations detected by the two acceleration sensors.

8. A moving object imaging method for a moving object imaging system including an imager that captures an image of a moving object and outputs captured image data, a deflector that changes a deflection angle of an optical axis of the imager by rotating a reflecting mirror, a housing that supports the deflector, and a posture change detector that detects change in posture of the housing, the method comprising:

controlling a deflection angle of the deflector in accordance with a detection result of the posture change detector.

9. The moving object imaging method according to claim 8,
wherein the moving object imaging system further includes an image display device that displays the display data which is generated on the basis of the captured image data, and
wherein the display data displayed on the image display device is obtained by cutting out a partial region of the captured image data on the basis of an amount of shift of the housing which is calculated on the basis of an acceleration detected by the posture change detector.

10. The moving object imaging method according to claim 8,
wherein the moving object imaging system further includes an image display device that displays the display data which is generated on the basis of the captured image data, and
wherein the display data displayed on the image display device is obtained by performing rotation processing on the captured image data on the basis of an amount of rotation of the housing which is calculated on the basis of an acceleration detected by the posture change detector.

# FIG. 1

MOVING OBJECT
IMAGING APPARATUS

IMAGING
APPARATUS
CONTROL UNIT

TRIGGER SIGNAL

IMAGE
PROCESSING
DEVICE

IMAGE
DISPLAY DEVICE

EP 3 547 011 A1

# FIG. 2

2

IMAGING APPARATUS
CONTROL UNIT

2a — TARGET ANGLE
CALCULATION UNIT

2b — DEFLECTION ANGLE
COMMAND UNIT

$\theta_1$

2c — ANGULAR VELOCITY
DETECTION UNIT

$\omega$

5

DEFLECTOR

ANGLE SENSOR — 51

MOTOR CONTROL UNIT — 52

ANGULAR
VELOCITY SENSOR — 6

# FIG. 3

2

IMAGING APPARATUS
CONTROL UNIT

INTEGRATOR

AMOUNT OF
ROTATION $\Delta\theta$

ANGULAR
VELOCITY $\omega$

$1/s$

−

TARGET
ANGLE $\theta_0$

+

ANGLE
COMMAND
VALUE $\theta_1$

5

DEFLECTOR

DETECTED ANGLE $\theta_2$

−

+

C

M

COMPENSATOR    CURRENT
VALUE

MOTOR AND
ANGLE SENSOR

10

## FIG. 4

IMAGE
PROCESSING
DEVICE

IMAGE
DISPLAY DEVICE

IMAGING
APPARATUS
CONTROL UNIT

TRIGGER
SIGNAL

MOVING OBJECT
IMAGING APPARATUS

# FIG. 5

2

5

IMAGING APPARATUS CONTROL UNIT

DEFLECTOR

2a — TARGET ANGLE CALCULATION UNIT

2b — DEFLECTION ANGLE COMMAND UNIT

$\theta_1$

ANGLE SENSOR — 51

MOTOR CONTROL UNIT — 52

2c — ANGULAR VELOCITY DETECTION UNIT

$\omega$

ANGULAR VELOCITY SENSOR — 6

2d — ACCELERATION DETECTION UNIT

$a$

ACCELERATION SENSOR — 9

2e — CORRECTION AMOUNT CALCULATION UNIT

$\Delta$

IMAGE PROCESSING DEVICE — 20

# FIG. 6

## FIG. 7

IMAGE
PROCESSING
DEVICE
20

IMAGE
DISPLAY DEVICE
30

IMAGING
APPARATUS
CONTROL UNIT
2

TRIGGER
SIGNAL

MOVING OBJECT
IMAGING APPARATUS

# FIG. 8

2

5

IMAGING APPARATUS
CONTROL UNIT

DEFLECTOR

2a —— TARGET ANGLE
CALCULATION UNIT

2b —— DEFLECTION ANGLE
COMMAND UNIT

$\theta_1$

ANGLE SENSOR —— 51

MOTOR CONTROL UNIT —— 52

2d —— ACCELERATION
DETECTION UNIT

a1, a2

ACCELERATION SENSOR —— 9

2e —— CORRECTION AMOUNT
CALCULATION UNIT

$\Delta, \Delta\theta$

IMAGE PROCESSING DEVICE —— 20

## FIG. 9A

## FIG. 9B

## FIG. 9C

# FIG. 10

Europäisches
Patentamt

European
Patent Office

Office européen
des brevets

**EUROPEAN SEARCH REPORT**

Application Number

EP 18 19 5223

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | JP 2007 228007 A (CASIO COMPUTER CO LTD) 6 September 2007 (2007-09-06) | 1-4,8 | INV. G02B27/64 |
| Y | * paragraphs [0008], [0019], [0020], [0117], [0116]; figures 1-4 * | 5,7,9,10 | G02B7/182 G01S3/786 G02B26/10 |
| X | US 5 867 317 A (ELIE PHILIPPE [FR] ET AL) 2 February 1999 (1999-02-02) | 1-4,8 | H04N5/225 |
| Y | * columns 1-8; figures 1-7 * | 5,7,9,10 | |
| X | US 2009/122406 A1 (NOKIA CORP [FI]; NOKIA INC [US] ET AL.) 14 May 2009 (2009-05-14) | 1,2,4,6,8 | |
| Y | * paragraphs [0048] - [0063]; figures 1,2,8 * | 5,9,10 | |
| X | US 2018/067335 A1 (CHEN XI [US] ET AL) 8 March 2018 (2018-03-08) | 1,2,4,6,8 | |
| Y | * paragraphs [0039], [0054] - [0065]; figures 1,2,8 * | 5,7,9,10 | |
| X | US 7 286 163 B2 (MINOLTA CO LTD [JP]) 23 October 2007 (2007-10-23) | 1-4,6,8 | |
| Y | * paragraphs [0071] - [0079]; figures 5,6 * | 5,7,9,10 | TECHNICAL FIELDS SEARCHED (IPC) |
| X | US 2006/098967 A1 (TOGAWA TSUYOSHI [JP]) 11 May 2006 (2006-05-11) | 1-4,6,8 | G02B H04N G01S |
| Y | * paragraphs [0053] - [0058], [0057]; figures 6-8 * | 5,7,9,10 | |
| Y | EP 3 096 512 A1 (AXIS AB [SE]) 23 November 2016 (2016-11-23) * paragraphs [0028] - [0045]; figures 1-4 * | 5,9 | |
| Y | US 2014/002679 A1 (IKEDA SHUNICHIRO [JP]) 2 January 2014 (2014-01-02) * paragraphs [0008] - [0037]; figures 1-7 * | 7,10 | |

-/--

The present search report has been drawn up for all claims

| Place of search | Date of completion of the search | Examiner |
|---|---|---|
| Munich | 10 April 2019 | Baur, Christoph |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

page 1 of 2

Europäisches
Patentamt

European
Patent Office

Office européen
des brevets

# EUROPEAN SEARCH REPORT

Application Number

EP 18 19 5223

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | US 2016/360111 A1 (THIVENT DAMIEN J [US] ET AL) 8 December 2016 (2016-12-08)<br>* paragraphs [0057] - [0063] *<br>----- | 7,10 | |
| A | US 2016/088231 A1 (OKU HIROMASA [JP] ET AL) 24 March 2016 (2016-03-24)<br>* figures 1-3 *<br>----- | 1-10 | |

TECHNICAL FIELDS
SEARCHED (IPC)

The present search report has been drawn up for all claims

| Place of search | Date of completion of the search | Examiner |
|---|---|---|
| Munich | 10 April 2019 | Baur, Christoph |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

page 2 of 2

**EP 3 547 011 A1**

## ANNEX TO THE EUROPEAN SEARCH REPORT
## ON EUROPEAN PATENT APPLICATION NO.

EP 18 19 5223

10-04-2019

| Patent document cited in search report | | Publication date | Patent family member(s) | | Publication date |
|---|---|---|---|---|---|
| JP 2007228007 | A | 06-09-2007 | JP | 4887828 B2 | 29-02-2012 |
| | | | JP | 2007228007 A | 06-09-2007 |
| US 5867317 | A | 02-02-1999 | FR | 2738925 A1 | 21-03-1997 |
| | | | GB | 2305522 A | 09-04-1997 |
| | | | NL | 1004073 C2 | 20-03-1997 |
| | | | NO | 316949 B1 | 05-07-2004 |
| | | | US | 5867317 A | 02-02-1999 |
| US 2009122406 | A1 | 14-05-2009 | CN | 101401023 A | 01-04-2009 |
| | | | EP | 1984774 A1 | 29-10-2008 |
| | | | JP | 2009526257 A | 16-07-2009 |
| | | | US | 2009122406 A1 | 14-05-2009 |
| | | | WO | 2007091112 A1 | 16-08-2007 |
| US 2018067335 | A1 | 08-03-2018 | CN | 107800929 A | 13-03-2018 |
| | | | DE | 102017120602 A1 | 08-03-2018 |
| | | | DE | 202017105405 U1 | 08-12-2017 |
| | | | GB | 2566283 A | 13-03-2019 |
| | | | US | 2018067335 A1 | 08-03-2018 |
| | | | WO | 2018048701 A1 | 15-03-2018 |
| US 7286163 | B2 | 23-10-2007 | JP | 3861815 B2 | 27-12-2006 |
| | | | JP | 2004219930 A | 05-08-2004 |
| | | | US | 2004141065 A1 | 22-07-2004 |
| US 2006098967 | A1 | 11-05-2006 | CN | 1806202 A | 19-07-2006 |
| | | | JP | 2005003719 A | 06-01-2005 |
| | | | US | 2006098967 A1 | 11-05-2006 |
| | | | WO | 2004109386 A1 | 16-12-2004 |
| EP 3096512 | A1 | 23-11-2016 | CN | 106170067 A | 30-11-2016 |
| | | | EP | 3096512 A1 | 23-11-2016 |
| | | | JP | 6328688 B2 | 23-05-2018 |
| | | | JP | 2017022692 A | 26-01-2017 |
| | | | KR | 20160135662 A | 28-11-2016 |
| | | | TW | 201709720 A | 01-03-2017 |
| | | | US | 2016344935 A1 | 24-11-2016 |
| US 2014002679 | A1 | 02-01-2014 | CN | 103533230 A | 22-01-2014 |
| | | | JP | 6004785 B2 | 12-10-2016 |
| | | | JP | 2014010328 A | 20-01-2014 |
| | | | US | 2014002679 A1 | 02-01-2014 |
| US 2016360111 | A1 | 08-12-2016 | US | 2016360111 A1 | 08-12-2016 |
| | | | US | 2017280059 A1 | 28-09-2017 |

EPO FORM P0459

## ANNEX TO THE EUROPEAN SEARCH REPORT
## ON EUROPEAN PATENT APPLICATION NO.

EP 18 19 5223

This annex lists the patent family members relating to the patent documents cited in the above-mentioned European search report.
The members are as contained in the European Patent Office EDP file on
The European Patent Office is in no way liable for these particulars which are merely given for the purpose of information.

10-04-2019

| Patent document cited in search report | Publication date | Patent family member(s) | Publication date |
|---|---|---|---|
| US 2016088231 A1 | 24-03-2016 | CN 105210368 A<br>JP 6090786 B2<br>JP 2014219874 A<br>US 2016088231 A1<br>WO 2014181726 A1 | 30-12-2015<br>08-03-2017<br>20-11-2014<br>24-03-2016<br>13-11-2014 |

EPO FORM P0459

For more details about this annex : see Official Journal of the European Patent Office, No. 12/82

page 2 of 2

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP H10136234 A

- JP 2017225039 A